(19) Europäisches Patentamt
European Patent Office
Office européen des brevets

(11) Veröffentlichungsnummer: **0 422 440 A1**

(12) # EUROPÄISCHE PATENTANMELDUNG

(21) Anmeldenummer: **90118357.4**

(22) Anmeldetag: **25.09.90**

(51) Int. Cl.[5]: **C07F 9/6521**

(30) Priorität: **07.10.89 DE 3933546**

(43) Veröffentlichungstag der Anmeldung:
**17.04.91 Patentblatt 91/16**

(84) Benannte Vertragsstaaten:
**BE CH DE FR GB IT LI NL SE**

(71) Anmelder: **BAYER AG**

**W-5090 Leverkusen 1 Bayerwerk(DE)**

(72) Erfinder: **Arndt, Uwe, Dr.**
**Malteserstrasse 85**
**W-5000 Koeln 40(DE)**
Erfinder: **Block, Hans-Dieter, Dr.**
**Biesenbach 49**
**W-5090 Leverkusen 3(DE)**
Erfinder: **Schulz-Schlitte, Wolfgang-Hans, Dr.**
**Wiedstrasse 2**
**W-4047 Dormagen 1(DE)**

(54) **Neue Aminomethanphosphonsäurearylester, Verfahren zu ihrer Herstellung und ihre Verwendung.**

(57) Die Erfindung betrifft Aminomethanphosphonsäurearylester des Melamins, Verfahren zu ihrer Herstellung und ihre Verwendung als Flammschutzmittel sowie als vernetzend wirkender Komponente in Oligo- und Polykondensaten auf Basis Hydroxygruppen enthaltender Monomerer.

EP 0 422 440 A1

# NEUE AMINOMETHANPHOSPHONSÄUEREARYLESTER, VERFAHREN ZU IHRER HERSTELLUNG UND IHRE VERWENDUNG

Die Erfindung betrifft Aminomethanphosphonsäurearylester des Melamins, Verfahren zu ihrer Herstellung und ihre Verwendung als Flammschutzmittel sowie als vernetzend wirkender Komponente in Oligo- und Polykondensaten auf Basis Hydroxygruppen enthaltender Monomerer.

Phosphorhaltige Verbindungen, insbesondere aber Phosphonsäureester, finden Anwendung als wirksame Flammschutzmittel in Schäumen, Thermoplasten und Duroplasten. Eine hierfür gewöhnlich verwendete phosphorhaltige Verbindung ist, wie in der EP 0 108 713 beschrieben, das Dimethylmethylphosphonat (DMMP). Mit der Verwendung von DMMP sind jedoch Schwierigkeiten verbunden.

Erstens handelt es sich dabei um eine verhältnismäßig leicht flüchtige Flüssigkeit (Siedepunkt 181 °C), so daß das Material insbesondere bei erhöhten Temperaturen durch Verflüchtigung verloren gehen kann; zweitens handelt es sich um eine, wie die meisten Phosphonsäureester niederer aliphatischer Alkohole in Gegenwart alkylierbarer Substanzen, wie zum Beispiel Amin, alkylierend wirkende Verbindung.

Die EP 0 149 480 beschreibt die Verwendung von Phosphonsäuresalzen der Methanphosphonsäure, bei denen die genannten Nachteile eingeschränkt sind. Ein kompromißloser Einsatz von salzartigen Flammschutzmitteln ist jedoch bei einer Vielzahl von Anwendungen, z.B. dem Einsatz von Thermoplasten im Elektrik-Bereich, nicht möglich.

Aufgabe der Erfindung war die Bereitstellung einer Verbindungsklasse, die gegenüber den genannten Substanzklassen eine herabgesetzte Flüchtigkeit bei guter Flammschutzwirkung aufweist.

Diese Aufgabe wird erfindungsgemäß durch die Synthese von Aminomethanphosphonsäurearylestern der allgemeinen Formel (I) und ihren Salzen

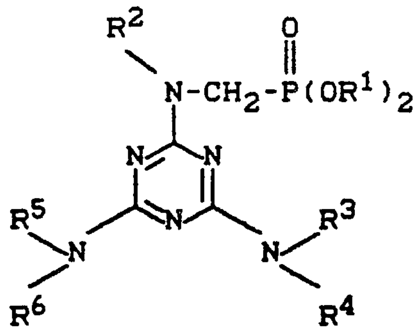

(I)

in der $R^1$ für einen aromatischen Rest steht und $R^2$, $R^3$, $R^4$, $R^5$ und $R^6$ unabhängig voneinander - H-Atome,

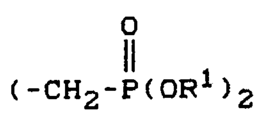-Gruppen,

ein gegebenenfalls substituierter $C_1$-$C_{10}$-Alkylrest oder einen gegebenenfalls substituierten aromatischen Ring darstellen,
gelöst.

Salze der Aminomethanphosphonsäurearylester der allgemeinen Formel (I) sind durch Quarternierung einzelner oder mehrerer Stickstoffatome durch alkylierende Substanzen, wie z.B. Alkyliodiden oder Phosphorigsäureestern oder Phosphonsäureestern niederer aliphatischer Alkohole, oder durch partielle Verseifung einzelner oder mehrerer Estergruppen, erhältlich.

Als aromatische Reste können zum Beispiel Phenylreste oder substituierte Phenylreste, wie z.B. die alkylsubstituierten isomeren Methyl- und Dimethylphenylreste, die isomeren Mono- und Diethylphenylreste, die isomeren Mono- und Diisopropylphenylreste, die isomeren Mono- und Di-tert.-Butylphenylreste, i-Oktylphenyl, Nonylphenyl, Phenylphenyl, Isopropylphenylphenyl, Dodecylphenyl, Methylenphenylphenyl, Isopropylidenphenylphenyl oder Cyclohexylphenyl, oder halogensubstituierte Phenylreste, wie z.B. die isomeren Mono- und Dichlorphenylreste, die isomeren Mono- und Dibromphenylreste, oder aminosubstituierte Phenylreste, wie z.B. Aminophenyl, oder gemischt substiutuierte Phenylreste, stehen.

Für den gegebenenfalls substituierten $C_1$-$C_{10}$-Alkylrest können die unsubstituierten und unverzweigten Alkylreste, wie Methyl, Ethyl, n-Propyl, n-Butyl usw. und ihre isomeren Formen, wie i-Propyl, i-Butyl, tert.-Butyl etc., stehen; für die substituierten Alkylreste können mono- oder mehrfach hydroxysubstituierte unverzweigte und verzweigte Reste, wie z.B. der $-CH_2-OH$-Rest, der $-CH_2-CH_2-OH$-Rest, der $-CH_2-CH_2-CH_2-OH$-Rest, der $-CH_2-CH(OH)-CH_3$-Rest, der $-CH_2-CH(OH)-C_2H_5$-Rest, der $-CH_2-CH(OH)-CH_2-Cl$-Rest, mono- oder mehrfach aminosubstituierte unverzweigte oder verzweigte Reste, wie z.B. der $-CH_2-NH_2$-Rest, der $-CH_2-CH_2-NH_2$-Rest, der $-CH_2-CH_2-CH_2-NH_2$-Rest, der $-CH_2-CH(NH_2)-CH_3$-Rest sowie iminosubstituierte Reste und halogensubstituierte Alkylreste sowie gemischt substituierte Alkylreste stehen.

Bevorzugt sind solche Aminomethanphosphonsäurearylester, in denen der gegebenenfalls substituierte $C_1$-$C_{10}$-Alkylrest für eine $-CH_2-OH$-Gruppe steht.

Aminomethanphosphonsäurearylester, in denen $R^3$ und $R^5$ für

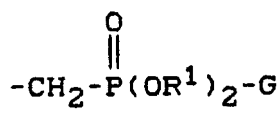-Gruppen

stehen und $R^2$, $R^4$ und $R^6$ unabhängig voneinander für -H-Atome oder $-CH_2-OH$-Gruppen stehen, sind besonders bevorzugt.

Gegenstand der Erfindung ist weiterhin ein Verfahren zur Herstellung von Aminomethanphosphonsäurearylestern der allgemeinen Formel I durch Reaktion eines gegebenenfalls substituierten Melamin-Derivates der allgemeinen Formel (II)

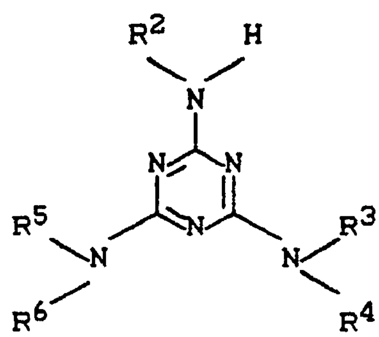

(II)

in der $R^2$, $R^3$, $R^4$, $R^5$ und $R^6$ die in Anspruch 1 genannte Bedeutung besitzen, mit einem Triarylphosphit der allgemeinen Formel

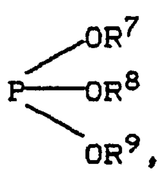

in der $R^7$, $R^8$ und $R^9$ für gleiche oder verschiedene aromatische Reste steht, in einem Molverhältnis von 0,01 bis 100 Mol.-% bezogen auf vorliegende -N-H-Funktionen, und mit Paraformaldehyd in einem Verhältnis von 100 bis 600 Mol-.% Paraformaldehyd bezogen auf Triarylphosphit bei Temperaturen von 20 bis 300° C.

Die anzuwendende Paraformaldehydmenge kann auch in Form von gasförmigem Formaldehyd zugeführt werden.

Besonders vorteilhaft verlaufen Reaktionen, bei denen das Triarylphosphit bezogen auf alle vorliegenden N-H-Funktionen in unterstöchiometrischer Menge eingesetzt wird.

Bevorzugt werden die Umsetzungen so durchgeführt, daß die Reaktion bei Temperaturen zwischen 90 und 160° C ausgeführt wird.

Verfahren, bei denen als Triarylphosphit Triphenylphosphit und als Melamin-Derivat das unsubstituierte Melamin eingesetzt wird, sind besonders bevorzugt.

Das gegebenenfalls substituierte Melamin, das Triarylphosphit und der Paraformaldehyd können in

einer einstufigen Reaktion miteinander umgesetzt werden.

Als besonders günstig hat sich eine Verfahrensvariante herausgestellt, bei der das gegebenenfalls substituierte Melamin und das Triarylphosphit vorgelegt werden und der Paraformaldehyd nachgeführt wird.

Die erfindungsgemäßen Aminomethanphosphonsäurearylester eignen sich hervorragend als Flammschutzmittel in Schäumen wie zum Beispiel Polyurethanschäumen und Polyisocyanuratschäumen und Polycarbodiimidschäumen auf Basis von Isocyanaten oder Carbodiimiden, Thermoplasten, wie z.B. Polyethylenterephthalat, Polybutylenterephthalat, Polyamid 6, Polyamid 6,6, Polycarbonat, Polyvinylchlorid, Polyacrylnitril, Polyacrylat, Polymethacrylat, Polybutadien, Polystyrol sowie Copolymeren und Cokondensaten verschiedener Monomere und Blends verschiedener Thermoplaste, wie z.B. einem Polycarbonat/Acrylnitril-Butadien/Styrol-Blend, und Duroplasten, wie z.B. Phenol-Formaldehyd-Harzen auf Basis von unsubstituiertem Phenol, Kresol, Xylenol und höheren homologen Phenolen, oder Formaldehyd-Harzen auf Basis aliphatischer und aromatischer Amine, wie z.B. Harnstoff, Thioharnstoff, Dicyandiamid, Melamin und den isomeren Phenylendiaminen, oder Harzen auf Basis von Epoxiden sowie ungesättigten Polyesterharzen auf Basis von z.B. Maleinsäure, Phthalsäure, Diolen und Styrol, gegebenenfalls in Kombination mit anderen Flammschutzmitteln, wie z.B. Triarylphosphaten, wie Triphenylphosphat, Diphenylkresylphosphat, Trikresylphosphat, den isomeren Iso-propylphenylphenylphosphaten, den isomeren Tert.-butylphenylphenylphosphaten, den isomeren α-Methylbenzylphenylphenylphosphaten, oder Trialkylphosphaten, wie z.B. Triethylphosphat, Trichlorethylphosphat, Trichlorpropylphosphat, Tris-dichlorpropylphosphat, Ethylenglykol-bis-di-2-chlorethylphosphat, Ethylenglykol-bis-di-2-chlorpropylphosphat, Diethylenglykol-bis-di-2-chlorethylphosphat, Bis-chlormethylpropandiol-bis-di-2-chlorethylphosphat, Bis-chlormethylpropandiol-bis-di-2-chlorethylphosphat oder Phosphonsäureestern, wie z.B. Methanphosphonsäuredimethylester, Methanphosphonsäurediphenylester, Benzolphosphonsäurediphenylester, oder Phosphinsäureestern, wie z.B. 1-Methoxy-1-oxophospholen, 1-Ethoxy-1-oxophospholen, 1-Propoxy-1-oxophospholen, 1-Phenoxy-1-oxophospholen, oder Phosphinoxiden, wie z.B. 1-Methyl-1-oxophospholen und Triphenylphosphanoxid, oder aliphatischen und aromatischen Phosphanen, wie z.B. Tributylphosphan oder Triphenylphosphan, Salzen dieser Verbindungen sowie Kombinationen dieser Verbindungen. Die erfindungsgemäßen Aminomethanphosphonsäurearylester eignen sich außerdem hervorragend als vernetztend wirkende Komponente in Oligo- und Polykondensaten auf Basis Hydroxygruppen enthaltender Monomerer.

Die erfindungsgemäßen Verbindungen werden in einer allgemeinen Form wie folgt hergstellt:

Das zu substituierende Melamin oder Melamin-Derivat wird mit einem Triarylphosphit in einem Mol.-Verhältnis von 0,01 bis 100 Mol.-% pro vorliegender -N-H-Funktion und mit Paraformaldehyd in einem Molverhältnis von 100 bis 600 Mol.-% bezogen auf eingesetztes Triarylphosphit bei Temperaturen von 20 bis 300 °C in Kontakt gebracht. Nach Abdestillieren flüchtiger Bestandteile nach abgeschlossener Reaktion können die erfindungsgemäßen Verbindungen, gegebenenfalls nach einer Reinigung durch eine Wäsche, erfindungsgemäß verwendet werden.

In einer bevorzugten Ausführungsform werden die erfindungsgemäßen Verbindungen in folgender Weise hergestellt:

Die entsprechend der gewünschten Produktzusammensetzung erforderlichen Mengen an Melamin bzw. Melamin-Derivat und Triarylphosphit werden in einem gerührten Reaktionsgefäß vorgelegt und auf 140 bis 150 °C aufgeheizt. Die entsprechend der gewünschten Produktzusammensetzung erforderliche Menge Paraformaldehyd wird bei dieser Temperatur sukzessive nachgeführt. Nach vollständiger Zugabe und abgeschlossener Reaktion werden die flüchtigen Bestandteile im Vakuum abdestilliert.

Die Erfindung soll anhand der folgenden Beispiele noch näher erläutert werden (Reinheits -Angaben sind - soweit nicht anders vermerkt ist - Phosphor-%).

Beispiele

Beispiel 1 : N-(Diphenoxyphosphonomethyl)-melamin

Durch Reaktion von 31,5 g (0,25 Mol) Melamin, 77,5 g (0,25 Mol) Triphenylphosphit und 9,9 g (0,33 Mol) Paraformaldehyd nach angegebener Vorschrift und Abdestillieren von 23 g flüchtigen Produkten bei einer Temperatur von 150 °C und einem Druck von 2 mbar werden 90 g Produkt entsprechend einer Ausbeute von 96,8 % mit einer Reinheit größer 90 % (bestimmt durch $^{31}P$-NMR) hergestellt.

Beispiel 2:

Durch Reaktion von 31,5 g (0,25 Mol) Melamin, 232,5 g (0,75 Mol) Triphenylphosphit und 30,0 g (1,00 Mol) Paraformaldehyd nach angegebener Vorschrift und Abdestillieren von 23 g flüchtigen Produkten bei einer Temperatur von 150°C und einem Druck von 2 mbar werden 203 g Produkt entsprechend einer Ausbeute von 94 % mit einer Reinheit von 90 % (bestimmt durch $^{31}$P-NMR, Summe aller Isomeren) hergestellt.

Beispiel 3:

Durch Reaktion von 31,5 g (0,25 Mol) Melamin, 465,0 g (1,50 Mol) Triphenylphosphit und 59,3 g (1,98 Mol) Paraformaldehyd nach angegebener Vorschrift und Abdestillieren von 23 g flüchtigen Produkten bei einer Temperatur von 150°C und einem Druck von 2 mbar werden 965 g Produkt entsprechend einer Ausbeute von 91 % mit einer Reinheit von 85 % (bestimmt durch $^{31}$P-NMR) hergestellt.

## Ansprüche

1. Aminomethanphosphonsäurearylester der allgemeinen Formel (I) und ihre Salzen

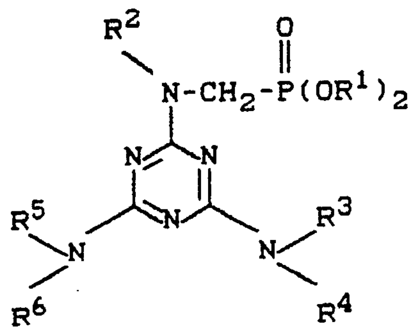

(I)

in der $R^1$ für einen aromatischen Rest steht und $R^2$, $R^3$, $R^4$, $R^5$ und $R^6$ unabhängig voneinander - H-Atome,

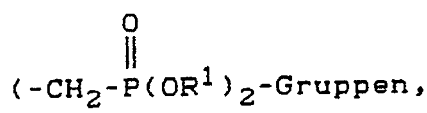

ein gegebenenfalls substituierter $C_1$-$C_{10}$-Alkylrest oder einen gegebenenfalls substituierten aromatischen Ring darstellen.

2. Verbindungen nach Anspruch 1, dadurch gekennzeichnet, das der gegebenenfalls substituierte $C_1$-$C_{10}$-Alkylrest für eine $-CH_2$-OH-Gruppe steht.

3. Aminomethanphosphonsäurearylester nach Anspruch 1 und 2, dadurch gekennzeichnet, daß $R^3$ und $R^5$ für

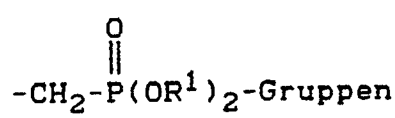

stehen, und $R^2$, $R^4$ und $R^6$ unabhängig voneinander für -H-Atome oder $-CH_2$-OH-Gruppen stehen.

4. Verfahren zur Herstellung von Aminomethanphosphonsäurearylestern nach Anspruch 1 und 3, dadurch gekennzeichnet, daß ein gegebenenfalls substituiertes Melamin-Derivat der allgemeinen Formel (II)

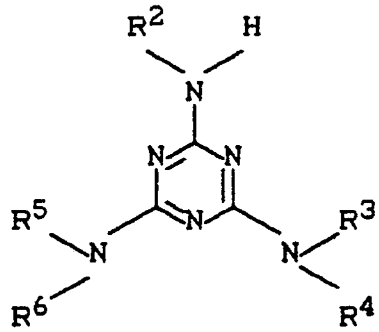

(II)

in der $R^2$, $R^3$, $R^4$, $R^5$ und $R^6$ die in Anspruch 1 genannte Bedeutung besitzen, mit einem Triarylphosphit der allgemeinen Formel

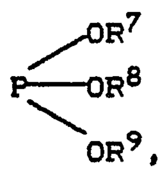

in der $R^7$, $R^8$ und $R^9$ für gleiche oder verschiedene aromatische Reste steht, einem Molverhältnis von 0,01 bis 100 Mol.-% bezogen auf vorliegende -N-H-Funktionen, und mit Paraformaldehyd in einem Verhältnis von 100 bis 600 Mol-% Paraformaldehyd bezogen auf Triarylphosphit bei Temperaturen von 20 bis 300 °C.

5. Verfahren nach Anspruch 4, dadurch gekennzeichnet, daß das Triarylphosphit bezogen auf alle vorliegenden N-H-Funktionen in unterstöchiometrischer Menge eingesetzt wird.

6. Verfahren nach einem der Ansprüche 4 oder 5, dadurch gekennzeichnet, daß als Triarylphosphit Triphenylphosphit und als Melamin-Derivat das unsubstituierte Melamin eingesetzt wird.

7. Verfahren nach einem der Ansprüche 4 bis 6, dadurch gekennzeichnet, daß das gegebenenfalls substituierte Melamin, das Triarylphosphit und der Paraformaldehyd in einer einstufigen Reaktion umgesetzt werden.

8. Verfahren nach einem der Ansprüche 4 bis 7, dadurch gekennzeichnet, daß das gegebenenfalls substituierte Melamin und das Triarylphosphit vorgelegt werden und der Paraformaldehyd nachgeführt wird.

9. Verwendung von Aminomethanphosphonsäurearylestern nach den Ansprüchen 1 bis 3 als Flammschutzmittel in Schäumen, Thermoplasten und Duroplasten, gegebenenfalls in Kombination mit anderen Flammschutzmitteln.

10. Verwendung von Aminomethanphosphonsäurearylestern nach den Ansprüchen 1 bis 3 als vernetzend wirkende Komponente in Oligo- und Polykondensaten auf Basis Hydroxygruppen enthaltender Monomerer.

Patentansprüche für folgenden Vertragsstaat: Spanien

1. Verfahren zur Herstellung von Aminomethanphosphonsäurearylestern der allgemeinen Formel (I) und ihren Salzen

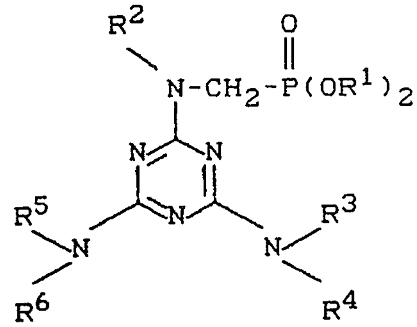

(I)

in der $R^1$ für einen aromatischen Rest steht und $R^2$, $R^3$, $R^4$, $R^5$ und $R^6$ unabhängig voneinander - H-Atome,

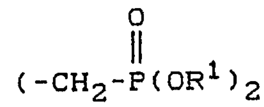-Gruppen,

ein gegebenenfalls substituierter $C_1$-$C_{10}$-Alkylrest oder einen gegebenenfalls substituierten aromatischen Ring darstellen, dadurch gekennzeichnet, daß ein gegebenenfalls substituiertes Melamin-Derivat der allgemeinen Formel (II)

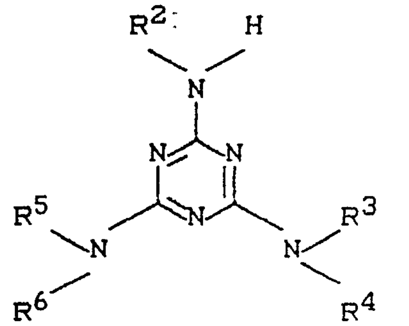

(II)

in der $R^2$, $R^3$, $R^4$, $R^5$ und $R^6$ die in Formel (I) genannte Bedeutung besitzen, mit einem Triarylphosphit der allgemeinen Formel

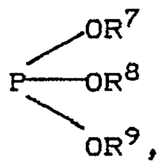

in der $R^7$, $R^8$ und $R^9$ für gleiche oder verschiedene aromatische Reste steht, in einem Molverhältnis von 0,01 bis 100 Mol.-% bezogen auf vorliegende -N-H-Funktionen, und mit Paraformaldehyd in einem Verhältnis von 100 bis 600 Mol-% Paraformaldehyd bezogen auf Triarylphosphit bei Temperaturen von 20 bis 300 °C umgesetzt wird.

2. Verfahren nach Anspruch 1, dadurch gekennzeichnet, daß das Triarylphosphit bezogen auf alle vorliegenden N-H-Funktionen in unterstöchiometrischer Menge eingesetzt wird.

3. Verfahren nach einem der Ansprüche 1 oder 2, dadurch gekennzeichnet, daß als Triarylphosphit Triphenylphosphit und als Melamin-Derivat das unsubstituierte Melamin eingesetzt wird.

4. Verfahren nach einem der Ansprüche 1 bis 3, dadurch gekennzeichnet, daß das gegebenenfalls substituierte Melamin, das Triarylphosphit und der Paraformaldehyd in einer einstufigen Reaktion umgesetzt werden.

5. Verfahren nach einem der Ansprüche 1 bis 4, dadurch gekennzeichnet, daß das gegebenenfalls substituierte Melamin und das Triarylphosphit vorgelegt werden und der Paraformaldehyd nachgeführt wird.

6. Verwendung von Aminomethanphosphonsäurearylestern hergestellt nach den Ansprüchen 1 bis 5 als Flammschutzmittel in Schäumen, Thermoplasten und Duroplasten, gegebenenfalls in Kombination mit anderen Flammschutzmitteln.

7. Verwendung von Aminomethanphosphonsäurearylestern hergestellt nach den Ansprüchen 1 bis 5 als vernetzend wirkende Komponente in Oligo- und Polykondensaten auf Basis Hydroxygruppen enthaltender Monomerer.

Europäisches Patentamt

# EUROPÄISCHER RECHERCHENBERICHT

Nummer der Anmeldung

EP 90 11 8357

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 042 661 (FARBENFABRIKEN BAYER)<br>* Insgesamt *<br>--- | 1-10 | C 07 F 9/6521 |
| A | DE-A-2 315 212 (HOOKER)<br>* Insgesamt *<br>----- | 1-10 | |

| RECHERCHIERTE SACHGEBIETE (Int. Cl.5) |
|---|
| C 07 F 9/00<br>C 08 K 5/00 |

Der vorliegende Recherchenbericht wurde für alle Patentansprüche erstellt

| Recherchenort | Abschlußdatum der Recherche | Prüfer |
|---|---|---|
| DEN HAAG | 17-01-1991 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)